(19) Europäisches Patentamt

European Patent Office

Office européen des brevets

(11) **EP 0 833 136 A2**

(12) **EUROPÄISCHE PATENTANMELDUNG**

(43) Veröffentlichungstag:
01.04.1998  Patentblatt 1998/14

(51) Int. Cl.⁶: **G01J 3/18**

(21) Anmeldenummer: 97115478.6

(22) Anmeldetag: 06.09.1997

(84) Benannte Vertragsstaaten:
AT BE CH DE DK ES FI FR GB GR IE IT LI LU MC NL PT SE

(30) Priorität: 27.09.1996 DE 19639668

(71) Anmelder:
• Carl Zeiss
D-89518 Heidenheim (Brenz) (DE)
Benannte Vertragsstaaten:
DE FR

• CARL ZEISS-STIFTUNG HANDELND ALS CARL ZEISS
D-89518 Heidenheim (Brenz) (DE)
Benannte Vertragsstaaten:
GB

(72) Erfinder: **Nelles, Bruno, Dr.**
73447 Oberkochen (DE)

(54)  **Monochromator mit Unterdrückung höherer Beugungsordnungen**

(57)  Ein Gittermonochromator, speziell für Synchrotronstrahlung, mit Sägezahngitter (1) wird mit einer Bedingung für den Zusammenhang von Wellenlänge (Lambda) und Eintrittswinkel ($\alpha$) betrieben, die nach der elektromagnetischen Beugungstheorie die zweite Beugungsordnung (m = 2) oder eine höhere Beugungsordnung vollständig eliminiert. Dabei ist die Kurve "Lambda ($\alpha$)" etwa doppelt so hoch, wie im On-Blaze-Betrieb, hat aber bei großen Winkeln ($\alpha$) ein resonanzartiges Maximum. Der Wirkungsgrad der Beugung erster Ordnung wird erhöht.

FIG. 2

EP 0 833 136 A2

**Beschreibung**

Die Erfindung betrifft einen Monochromator mit Eintrittsspalt, Sägezahngitter und Austrittsspalt, sowie ein Verfahren zu dessen Betrieb.

Derartige Monochromatoren werden vielfach im On-Blaze-Modus betrieben, das heißt Eintrittswinkel und Austrittswinkel bezogen auf die Sägezahnflächen sind gleich (Glanzwinkel). Die klassisch-geometrische Beugungstheorie ergibt dafür maximalen Wirkungsgrad der Beugung erster Ordnung von bis zu 60 %. Die genauere elektromagnetische Theorie und die Praxis zeigen aber, daß nur Wirkungsgrade unter etwa 20 % möglich sind. Zudem ist in diesem On-Blaze-Modus der Wirkungsgrad für die zweite und höhere Beugungsordnungen beträchtlich hoch. Dies ist in allen Fällen störend, wo deren Beseitigung durch Kantenfilter nicht möglich ist, zum Beispiel im Bereich der Synchrotron-Strahlung.

Andere Betriebsarten nutzen einfache geometrische Verhältnisse, zum Beispiel der Fixfokus-Modus, bei dem die Lage des Austrittsspalts bezogen auf den Eintrittsspalt festgelegt bleibt. Die Wirkungsgrade sind dabei nicht optimiert.

Für einzelne Wellenlängen kann bei diesen bekannten Betriebsarten die zweite oder eine höhere Beugungsordnung wirksam unterdrückt sein.

Ein Beugungsgitter mit kontrolliertem Anteil höherer Beugungsordnungen, insbesondere mit Unterdrückung der zweiten Beugungsordnung, ist aus US 4,618,214 bekannt. Es handelt sich jedoch um ein Transmissionsgitter mit binären Strukturen, bei dem ein Amplitudengitter und ein Phasengitter auf einem transparenten Substrat überlagert sind. Im Bereich der Synchrotron-Strahlung ist ein derartiges Gitter unbrauchbar.

Aufgabe der Erfindung ist es, einen Gittermonochromator mit hohem Wirkungsgrad für die Beugung in der ersten Ordnung bei gleichzeitig wirksamer Unterdrückung höherer Beugungsordnungen anzugeben, der mit hoher spektraler Bandbreite funktioniert. Auch ein entsprechendes Betriebsverfahren soll angegeben werden.

Die Lösung dieser Aufgabe gelingt mit einem Monochromator nach einem der nebengeordneten Ansprüche 1 bis 3, bzw. mit einem Verfahren zum Betrieb eines Monochromators nach Anspruch 4.

Dabei geht die Erfindung aus von der Erkenntnis, daß in entsprechender Weise wie die On-Blaze-Bedingung bder die Fixfokus-Bedingung auch die Bedingung der Unterdrückung einer höheren Beugungsordnung, insbesondere der zweiten, neben der Gittergleichung zur Bestimmung der Betriebsparameter eines Monochromators herangezogen werden kann. Überraschend wurde gefunden, daß sich sogar der Wirkungsgrad für die erste Beugungsordnung breitbandig gegenüber bekannten Betriebsarten erhöht - dies kommt in Anspruch 1 zum Ausdruck.

Ebenso überraschend wurde festgestellt, daß der Keilwinkel des Sägezahngitters für sonst gleiche Bedingungen gegenüber dem On-Blaze-Modus ziemlich gleichmäßig reduziert ist, bei Unterdrückung der zweiten Ordnung um etwa die Hälfte. Dies ist in Anspruch 2 wiedergegeben.

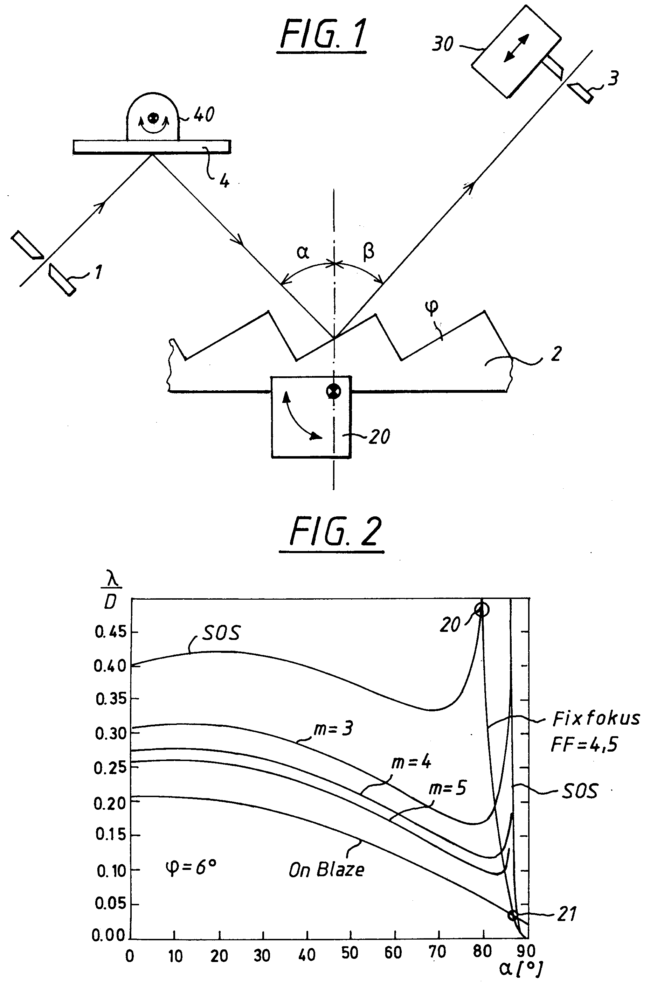

Die auf die Gitterkonstante D normierte Durchlaßwellenlänge Lambda als Funktion des Eintrittswinkels $\alpha$ ist eine geeignete Beschreibung der Betriebsart eines Monochromators. Für den On-Blaze-Betrieb ist dies - bei dem relativ hohen Keilwinkel $\Phi = 6°$ wie in Fig. 1 - eine monoton fallende Funktion (Lambda/D = $\sin(2\Phi-\alpha) + \sin\alpha$), die bei 0° etwa 0,21 beträgt und bei rund 70° auf 0,1 abgefallen ist, bei 85° dann auf rund 0,04.

Bei der erfindungsgemäßen Ausführung liegt dieser Wert bei ähnlichem Kurvenverlauf bis in den Bereich von etwa 70° bis 80° deutlich höher, und zwar bei Unterdrückung der zweiten Ordnung etwa beim Zweifachen. Bei größeren Eintrittswinkeln $\alpha$ erreicht die Funktion ein resonanzähnliches Maximum und fällt dann nach 90° hin steil zu Null ab. Auch mit Kurven, die davon abweichen, sind stark verbesserte Verhältnisse von transmittierter erster zu zweiter Beugungsordnung des Monochromators zu erreichen, was in Anspruch 3 zum Ausdruck kommt.

Die Merkmale der nebengeordneten Ansprüche werden von Ausführungen der Erfindung in beliebiger Kombination, insbesondere auch alle zugleich, erfüllt.

Näher erläutert wird die Erfindung anhand der Zeichnung.
Es zeigen:

Fig. 1    in einer Prinzipskizze die Monochromatorgeometrie;

Fig. 2    die Funktion Lambda/D ($\alpha$) bei einem Keilwinkel $\Phi$ von 6° für verschiedene Betriebsweisen;

Fig. 3    die Funktion Lambda ($\alpha$) bei einem Keilwinkel $\Phi$ von 1,3° für verschiedene Betriebsweisen;

Fig. 4    die Funktion Lambda ($\alpha$) bei einem Keilwinkel $\Phi$ von 0,7° für verschiedene Betriebsweisen.

Der Prinzipaufbau eines Monochromators gemäß Fig. 1 zeigt die Hauptelemente Eintrittsspalt 1, Sägezahngitter 2 und Austrittsspalt 3, sowie zusätzlich einen Spiegel 4. Das Sägezahngitter 2 hat die Gitterkonstante D und den Keilwinkel $\Phi$, mit einem Antrieb 20 ist es drehbar. Der Eintrittswinkel $\alpha$ und der Austrittswinkel $\beta$ werden gegen die Gitternormale gemessen und sind durch den Antrieb 20 verstellbar. Der Austrittsspalt 3 kann durch einen Schiebeantrieb 30 in den Fokus verschoben werden. Mit einem Antrieb 40 kann auch der Spiegel 4 gedreht werden.

Der Keilwinkel $\Phi$ wird vielfach Blazewinkel genannt, bezogen auf den Normalfall des On-Blaze-Betriebs.

Der Spiegel 4 kann zur Erzeugung einer gewünschten Monochromatorgeometrie, bei entsprechender Formung auch zur Fokussierung, oder auch zur Wellenlängen-Vorselektion - wozu unten noch näheres folgt - dienen.

Dieser Aufbau ist soweit bekannt. Er wird aber weder im On-Blaze-Betrieb benutzt noch im Fixfocus-Mode, bei dem gilt $\cos\beta : \cos\alpha = FF$ mit dem Fixfokusfaktor FF, und bei dem der Austrittsspalt 3 nicht verschoben werden muß.

Fig. 2 zeigt den Unterschied anhand der Funktion Lambda/D ($\alpha$) für ein Gitter mit dem relativ großen Keilwinkel $\Phi = 6°$. Wie schon beschrieben, fällt die Kurve für den On-Blaze-Betrieb von 0° bis 90° kontinuierlich ab. Für den Fixfocus-Mode, hier mit FF = 4,5 dargestellt, ergibt sich ein steiler Abfall von Lamoda/D von 0,5 bei ca. 80° zu Null bei 90°.

Die erfindungsgemäßen Kurven SOS, m=3, m=4, und m=5, bei denen die 2., 3., 4., und 5. Beugungsordnung vollständig unterdrückt sind, verlaufen bei Eintrittswinkeln $\alpha$ bis über 70° zunächst ähnlich wie die On-Blaze-Kurve. Allerdings ist der Wert von Lamoda/D deutlich höher, bei SOS etwa das Doppelte, und bei SOS bildet sich bei rund 20° ein flaches Maximum aus. Bei großen Eintrittswinkeln $\alpha$ oberhalb 80° bildet sich ein resonanzartiges Maximum aus. Der Beginn der Flanke wandert mit zunehmender Ordnungszahl m zu höheren Winkeln $\alpha$. Zu 90° hin folgt ein steiler Abfall, der nur für die zweite Ordnung SOS eingetragen ist.

Praktisch bedeutsam ist im wesentlichen die Kurve SOS mit Unterdrückung der zweiten Ordnung, da die höheren ohnehin weitaus weniger vertreten sind. Für Sonderfälle zeigt sich aber, daß die Erfindung auch zur Unterdrückung der höheren Ordnungen taugt.

Die Fixfocus-Kurve FF kreuzt die erfindungsgemäßen Kurven, für SOS im Punkt 20 bei ca. 80° und Lambda/D von 0,48, und fällt bei über 88° praktisch mit diesen zusammen. Bei 21 kreuzt die Kurve FF auch die On-Blaze-Kurve.

Der mit Monochromatoren für Synchrotronstrahlung im Wellenlängenbereich von ca. 0,5 nm bis ca. 40 nm praktisch nutzbare Bereich reicht etwa von $\alpha = 70°$ bis $\alpha = 89,5°$.

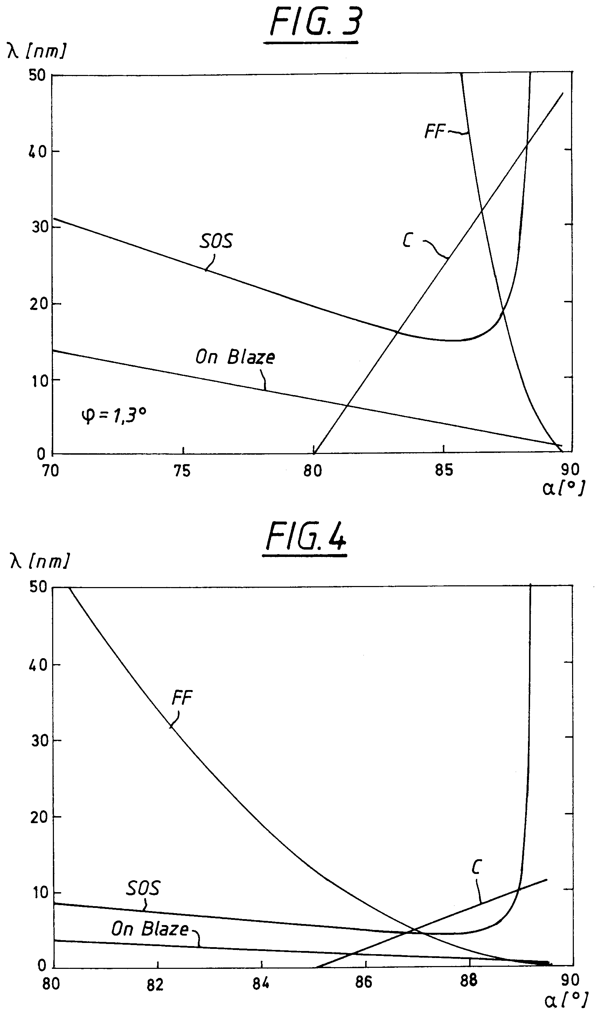

Für diesen Einsatz im Bereich der Synchrotron-Strahlung werden auch durchweg niedrigere Keilwinkel $\Phi$ verwendet. Dafür verschieben sich die Kurven der Fig. 2 zu niedrigeren Werten von Lamoda/D - da die Gitterkonstante fertigungstechnisch nicht beliebig reduziert werden kann, ist dies zur Erreichung niedrigerer Wellenlängen Lambda notwendig - und der Anstieg zum Maximum verschiebt sich zu größeren Winkeln $\alpha$ oberhalb 88° bei dem Keilwinkel $\Phi = 1,3°$ als Beispiel der Fig. 3.

Hier ist die Gitterkonstante mit 1200 Linien pro mm angegeben. Der Verlauf der SOS-Kurve kann mit der On-Blaze Kurve, der Fixfocus-Kurve FF mit FF = 4,5 und mit der Kurve C für konstanten Ablenkwinkel $\alpha + \beta = 160°$ verglichen werden. Wie bereits gesagt, verschieben sich die Kurven und ihre Schnittpunkte zu kleineren Wellenlängen und höheren Winkeln.

Im Beispiel der Fig. 4 mit dem Keilwinkel $\Phi = 0,7°$ bei sonst gleichen Bedingungen verstärkt sich dieser Effekt noch.

Allen Beispielen gemeinsam ist, daß die SOS-Kurve durchweg bei etwa dem doppelten der On-Blaze-Kurve verläuft und bei großen Winkeln $\alpha$ ein resonanzartiges Maximum durchläuft.

Etwa 60 bis 80 % dieser Wirkungsgrade gemäß der elektromagnetischen Theorie können erfahrungsgemäß bei Gitterexemplaren fertigungstechnisch realisiert werden.

Zur Unterdrückung der zweiten Beugungsordnung, oder in Kombination mit der erfindungsgemäßen Betriebsweise des Gitters 2 zur Eliminierung der ungeraden Beugungsordnungen m=3 usw., ist es zunächst auch möglich, einfach anstelle des Spiegels 4 ein zweites Gitter vorzusehen. Normalerweise verbietet sich das aber, da damit der Wirkungsgrad des Monochromators um eine Größenordnung reduziert wird. Allerdings kann hier ein Beugungsgitter Abhilfe schaffen, das in nullter Ordnung betrieben wird.

Ein solches Gitter mit 1200 Linien pro mm und mit dem Keilwinkel 1,8° ergibt mit dem SOS-Betrieb gemäß Fig. 3 mit einem Gitter 1 mit gleicher Gitterkonstante und Keilwinkel $\Phi = 1,3°$ eine wirksame Kombination.

**Patentansprüche**

1. Monochromator mit Eintrittsspalt (1), Sägezahngitter (2), Austrittsspalt (3), gekennzeichnet durch einen Wirkungsgrad für den Durchgang von Licht einer Wellenlänge, das in erster Ordnung gebeugt wird, von über 20 %, insbesondere über 25 %, und zugleich einem Wirkungsgrad für den Durchgang von Licht der halben Wellenlänge, das in zweiter Ordnung gebeugt wird, von unter 5 %, insbesondere unter 2 % über einen Spektralbereich von plus/minus der halben Wellenlänge bezogen auf eine Bezugswellenlänge.

2. Monochromator mit Eintrittsspalt (1), Sägezahngitter (2), Austrittsspalt (3), mit einem Eintrittswinkel ($\alpha$) gegen die Gitternormale und einem Austrittswinkel ($\beta$) gegen die Gitternormale und mit einem Keilwinkel ($\Phi$) der Sägezahnstruktur des Sägezahngitters, dadurch gekennzeichnet, daß für den gesamten genutzten Spektralbereich der Keilwinkel ($\Phi$) kleiner als das 0,8-fache, insbesondere kleiner als das 0,6-fache des Blazewinkels ist.

3. Monochromator mit Sägezahngitter, bei dem für alle Einfallswinkel ($\alpha$) unter 85° das Verhältnis von Durchlaßwellenlänge (Lambda) zu Gitterkonstante (D) größer als das Einskommafünffache, insbesondere größer als das Einskommaachtfache, des Werts für die On-Blaze-Anordnung ist und für Einfallswinkel ($\alpha$) unter 70° das Verhältnis kleiner als das Vierfache, insbesondere kleiner als das Dreifache, des Werts für die On-Blaze-Anordnung ist.

4. Verfahren zum Betrieb eines Monochromators mit Sägezahngitter, dadurch gekennzeichnet, daß die Durchlaßwellenlänge (Lambda), der Keilwinkel ($\Phi$), der Eintrittswinkel ($\alpha$) und der Austrittswinkel ($\beta$) nach der Bedingung eingestellt werden, daß der Wirkungsgrad für eine Beugungsordnung (m) größer oder gleich Zwei nach der elektromagnetischen Gittertheorie unter 2 %, insbesondere bei Null, liegt.

# FIG. 1

# FIG. 2

## FIG. 3

## FIG. 4